# EUROPEAN PATENT APPLICATION

(11) **EP 4 621 957 A1**
(43) Date of publication of application: **24.09.2025**
(21) Application number: 24203851.1
(22) Date of filing: 01.10.2024
(51) Int. Cl.: H01M 50/213, H01M 50/284, H01M 50/507, H01M 50/519

(54) **BATTERY PACK**

(30) Priority: 19.03.2024 CN 202420536890 U; 17.05.2024 WO PCT/CN2024/093823
(71) Applicant: Eve Energy Co., Ltd., Huizhou, Guangdong 516006 (CN)
(72) Inventor: LIANG, Xianyu, Huizhou, Guangdong 516006 (CN); WEI, Xueqing, Huizhou, Guangdong 516006 (CN); PENG, Yingjie, Huizhou, Guangdong 516006 (CN); LIU, Pingping, Huizhou, Guangdong 516006 (CN)
(74) Representative: Murgitroyd & Company

(57) **Abstract**

A battery pack (100) is disclosed, including a battery module (40) and a battery management assembly (20) connected to the battery module (40). The battery management assembly (20) includes a printed circuit board (201), a positive busbar (202), a negative busbar (203), and a flexible circuit board (204). One end of the positive busbar (202) and one end of the negative busbar (203) are connected to the battery module (40), respectively. Another end of the positive busbar (202) and another end of the negative busbar (203) are connected to the printed circuit board (201), respectively. The flexible circuit board (204) is connected to the positive busbar (202), the negative busbar (203), the battery module (40) and the printed circuit board (201), respectively. Materials such as adapter connectors, adapter copper bars, bolts, and nuts are saved, which greatly reduces the production cost and assembly cost of the battery pack.

## Description

### TECHNICAL FIELD

The present disclosure relates to the battery field, in particular to a battery pack.

### BACKGROUND

As automobiles have higher and higher requirements for battery energy density, battery pack technology also needs to be continuously optimized. The market has also put forward new requirements for the manufacturing cost, process reliability and process simplicity of lithium batteries.

### SUMMARY

At present, the number of electrical connection structural parts of the power battery module is large and the structure is complex, which increases the overall size, manufacturing cost and assembly cost of the module, resulting in high production and assembly costs.

The present disclosure provides a battery pack, including a battery module and a battery management assembly. The battery management assembly is connected to the battery module. One end of the positive busbar and one end of the negative busbar are connected to the battery module, respectively. Another end of the positive busbar and another end of the negative busbar are connected to the printed circuit board, respectively. The flexible circuit board is connected to the positive busbar, the negative busbar, the battery module and the printed circuit board, respectively.

Beneficial effect: The battery pack provided in the present disclosure includes the battery module and the battery management assembly. The battery management assembly is connected to the battery module. One end of the positive busbar and one end of the negative busbar are connected to the battery module, respectively. Another end of the positive busbar and another end of the negative busbar are connected to the printed circuit board, respectively. The flexible circuit board is connected to the positive busbar, the negative busbar, the battery module and the printed circuit board, respectively. Materials such as adapter connectors, adapter copper bars, bolts, and nuts are saved, which greatly reduces the production cost and assembly cost of the battery pack, and realizes the effect of reducing costs and simplifying assembly processes.

### BRIEF DESCRIPTION OF THE DRAWINGS

FIG. 1 is a schematic view of a battery pack provided by some embodiments of the present disclosure.
FIG. 2 is an explosive schematic view of the battery pack provided by some embodiments of the present disclosure.
FIG. 3 is an exploded top schematic view of the battery pack provided by some embodiments of the present disclosure.
FIG. 4A and FIG. 4B are schematic views of an upper cover provided by some embodiments of the present disclosure.
FIG. 5 is a schematic view of a lower cover provided by some embodiments of the present disclosure.
FIG. 6 is a schematic view of a plastic bracket provided by some embodiments of the present disclosure.

### Reference numerals:

100, battery pack; 10, housing; 101, upper cover; 1011, first connection bar; 1012, second connection bar; 1013, first output stud; 1014, second output stud; 1015, communication connector; 10151, connection port; 10152, connection pin; 1016. mounting groove; 102, lower cover; 1021, placement groove; 20, battery management assembly; 201, printed circuit board; 202, positive busbar; 203, negative busbar; 204, flexible circuit board; 2041, first flexible circuit board; 2042, second flexible circuit board; 30, plastic bracket; 301, fixing portion; 40, battery module; 401, cell; 50, connection busbar.

### DETAILED DESCRIPTION

In the description of the present disclosure, it should be understood that, unless specified or limited otherwise, the terms "connected", "coupled" and "fixed" are used broadly, and may be, for example, fixed connections, detachable connections, or integrated connections; may also be mechanical or electrical connections; may also be direct connections or indirect connections via intervening structures; may also be inner communications of two elements or interaction relationships between two elements, which can be understood in the present disclosure by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on", "above", or "on top of" a second feature may include an embodiment in which the first feature is right or obliquely "on", "above", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the embodiments, orientational or positional relationships represented by directional terms mentioned in the present disclosure, such as "up", "down", "right", etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of this application. In addition, the terms "first" and "second" are used to distinguish in description and have no special meaning.

The present disclosure may repeat reference numbers and/or reference letters in different embodiments, and such repetition is for the purpose of simplification and clarity, and does not indicate the relationship between the various embodiments and/or settings discussed.

The battery pack provided by the present disclosure will be described in detail below with reference to specific embodiments and accompanying drawings. In some embodiments, the battery pack includes, for example, a cylindrical battery.

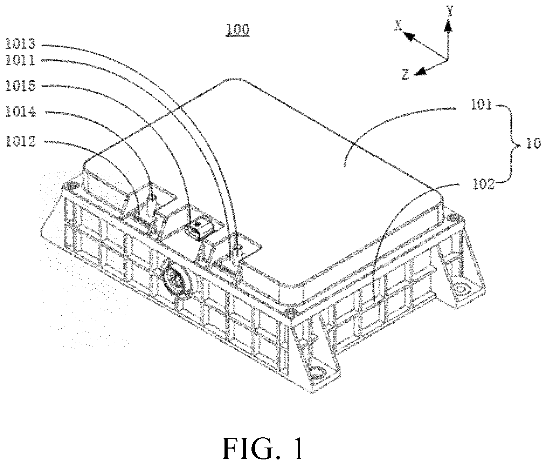

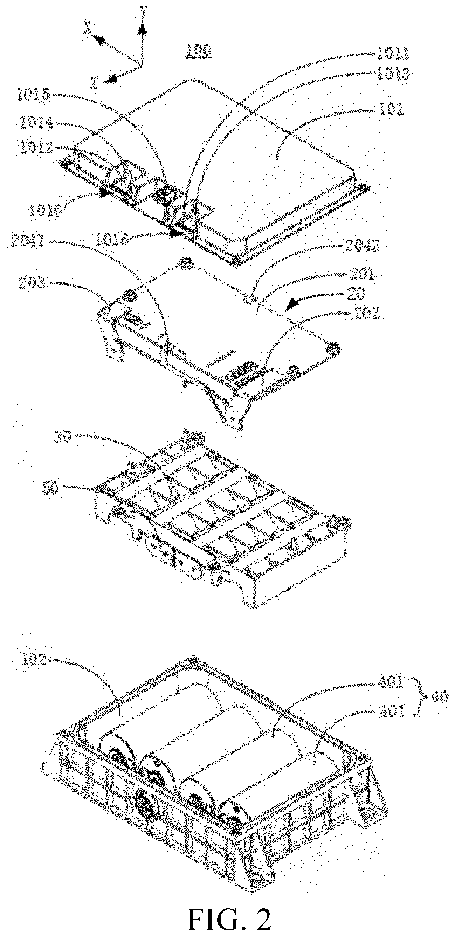

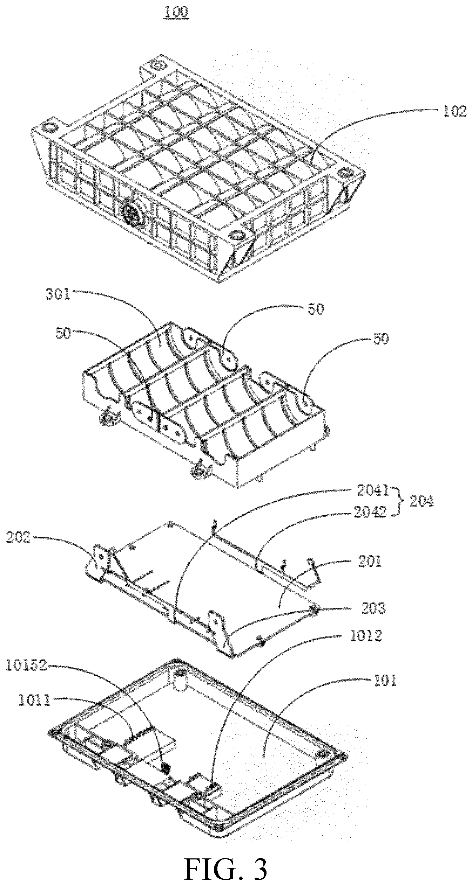

Referring to FIGs. 1, 2 and 3, the present disclosure provides a battery pack 100 including a battery module 40 and a battery management assembly 20. The battery management assembly 20 is connected to a battery module 40. The battery management assembly 20 includes a printed circuit board 201, a positive busbar 202, a negative busbar 203, and a flexible circuit board 204.

One end of the positive busbar 202 and one end of the negative busbar 203 are connected to the battery module 40, respectively. The other end of the electrode busbar 202 and the other end of the negative busbar 203 are connected to the printed circuit board 201, respectively. The flexible circuit board 204 is connected to the positive busbar 202, the negative busbar 203, the battery module 40, and the printed circuit board 201, respectively.

Specifically, the printed circuit board 201 is, for example, a PCB for transmitting signals of current, voltage, or temperature and for reading the current, voltage, and temperature of the battery module 40. The flexible circuit board 204 is, for example, a flexible printed circuit (FPC) for collecting the voltage and temperature of the battery module 40.

In an embodiment, the printed circuit board 201 is further provided with, for example, a plurality of MOS switches for controlling the shutdown of the current output.

In related technologies, the Printed Circuit Board (PCB) is further provided with an adapter connector. Acquisition lines for collecting voltage and temperature is connected to the adapter connector and the busbars (positive and negative busbars, and series and parallel busbars) to realize signal transmission and data reading. In related technologies, the acquisition lines and the adapter connector are connected by the plugging and unplugging method.

In the embodiments of the present disclosure, the flexible circuit board 204 is soldered to the positive busbar 202, the negative busbar 203, the battery module 40, and the printed circuit board 201, respectively. In an embodiment, the flexible circuit board 204 is also connected to the connection busbar 50 (described below). The flexible circuit board 204 is used for collecting the voltage and temperature of the battery module 40. The flexible circuit board 204 is directly connected to the printed circuit board 201, saving the adapter connector structure, and reducing the production cost and assembly process. In addition, the flexible circuit board 204 is soldered to the printed circuit board 201. Compared with the plugging and unplugging method of the related technology, the soldered connection is more stable.

Further, in the related technology, the positive electrode busbar and the negative electrode busbar are respectively connected to the printed circuit board through the adapter copper bar, and the positive electrode busbar and the negative electrode busbar are bolted to the adapter copper bar. In the embodiments of the present disclosure, the positive electrode busbar 202 and the negative electrode busbar 203 are directly soldered to the printed circuit board 201, thereby saving parts such as transfer copper bars, bolts, and nuts, and realizing the effect of cost reduction and process simplification.

In an alternative embodiment of the present disclosure, the battery pack 100 further includes a plastic bracket 30.

The plastic bracket 30 is disposed between the printed circuit board 201 and the battery module 40 along the first direction Y

The battery module 40 includes a plurality of cells 401 arranged along a second direction X intersecting the first direction Y Each of the cell 401 includes a positive electrode and a negative electrode. The positive busbar 202 is connected to the positive electrode of a first one or a last one of the cells 401 arranged along the second direction X. The negative busbar 203 is connected to a negative electrode of the last one or the first one of the cells 401 arranged along the second direction X. Specifically, the plastic bracket 30 plays an insulating role and increases the strength of the battery pack 100.

In an alternative embodiment of the present disclosure, the plastic bracket 30 is further provided with a plurality of connection busbars 50, and except for a positive electrode and a negative electrode which are connected to the positive electrode busbar 202 and the negative busbar 203, respectively. Each of the connection busbars 50 is connected to a positive electrode of one of adjacent two of the cells (401) and a negative electrode of another one of the adjacent two of the cells 401, respectively.

Specifically, the cell 401 includes a positive electrode and a negative electrode, the positive electrode and the negative electrode is located at both ends of the cell 401, respectively. The positive electrodes and the negative electrodes of the plurality of the cells 401 of the battery module 40 are staggered along the second direction X. A positive post and a negative post of the cell 401 is located on both ends of the cell 401, respectively. The positive busbar 202 is connected to a positive post of the cells 401, and the negative busbar 203 is connected to a negative post 201 of the cells 401. The positive busbar 202 and the negative busbar 203 are located on the same side of the printed circuit board 201. A plurality of positive posts and negative posts that are not connected to the positive busbar 202 and the negative busbar 203 are respectively connected through the connection busbars 50 to form the battery module, and a current loop is formed by the plurality of the cells 401 through the connection busbars 50.

In an embodiment, the number of the cells 401 is, for example, four. The positive posts and the negative posts of the four cells 401 are staggered along the second direction X. The positive busbar 202 is connected to the positive post of the outermost one of the four cells 401, the negative busbar 203 is connected to the negative post of the other outermost one of the cells 401. The positive busbar 202, the negative busbar 203, and the positive post and the negative post of the cells connected to both are all located on the same side. A positive post of one of the two intermediate cells 401 and a negative electrode of another one of the two intermediate cells 401 are connected through a connection bus 50. A negative post of the outermost cell 401 away from the positive busbar 202 is connected to a positive post of the adjacent cell 401 through the connection busbar 50. A positive post and a negative post of the other two cells 401 are connected through the connection busbar 50 to form a current loop, but the connection method of the connection to the busbars 50 is not limited thereto, depending on actual application.

In an embodiment, materials of the positive busbar 202, the negative busbar 203, and the connection busbars 50 are, for example, but not limited to, aluminum for collecting, pooling, or transmitting current of the battery module 40.

In an embodiment, the printed circuit board 201 is further integrated with a diverter through which current is transmitted to the first connection bar 1011 or the second connection bar 1012.

In an alternative embodiment of the present disclosure, the positive electrode and the negative electrode of the cell 401 are located at the same end of the cell 401. The flexible circuit board 204 includes a first flexible circuit board 2041, which is connected to the positive busbar 202, the negative busbar 203, the battery module 40, and the printed circuit board 201, respectively.

Specifically, when the positive electrode and the negative electrode of the cell 401 are located at the same end of the cell 401, the first flexible circuit board 2041 is located on the same side as the positive electrode and the negative electrode of the cell 401, which facilitates the connection of the first flexible circuit board 2041 to the battery module 40.

In another alternative embodiment of the present disclosure, the positive electrode and the negative electrode of the cell 401 are located at opposite ends of the cell 401. The flexible circuit board 204 includes a first flexible circuit board 2041 and a second flexible circuit board 2042. The first flexible circuit board 2041 is connected to the positive busbar 202, the negative busbar 203, the battery module 40 and the printed circuit board 201, respectively. The second flexible circuit board 2042 is connected to the connection busbar 50, the battery module 40 and the printed circuit board 201. The connection method, such as welding, is not limited thereto.

The first flexible circuit board 2041, the positive busbar 202, and the negative busbar 203 are located on the same side of the printed circuit board 201. The second flexible circuit board 2042 is located on the side of the printed circuit board 201 away from the first flexible circuit board 204.

Specifically, the second flexible circuit board 2042 is, for example, a flexible printed circuit (FPC). The second flexible circuit board 2042 and the first flexible circuit board 204 are located on opposite sides of the printed circuit board 201, respectively. The second flexible circuit board 2042 is used to collect the voltage and temperature of the battery module 40.

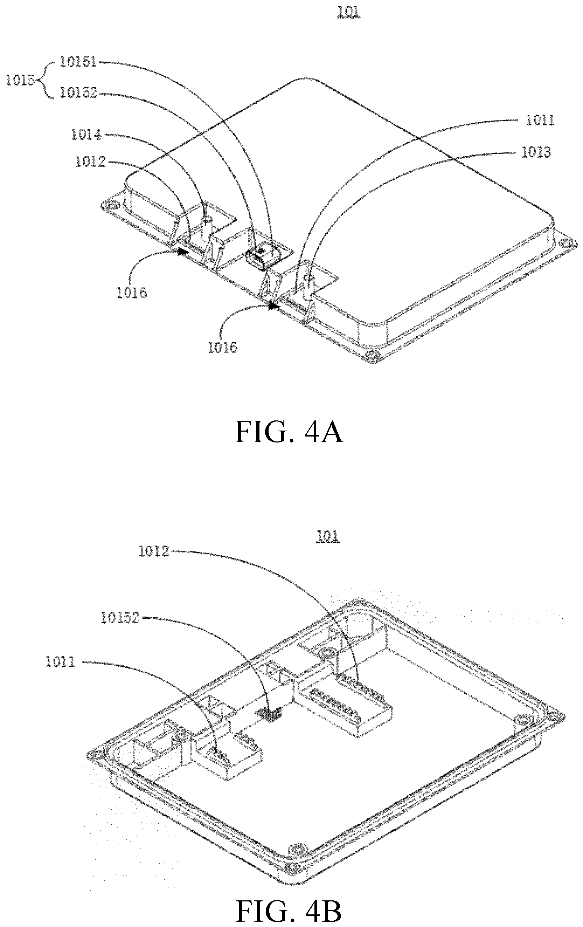

Referring to FIGs. 4A and 4B, in an alternative embodiment of the present disclosure, the battery pack 100 includes a housing 10.

The housing 10 includes an upper cover 101 and a lower cover 102 arranged along the first direction Y The upper cover 101 and the lower cover 102 form a volume set cavity. The battery module 40, the battery management assembly 20, and the plastic bracket 30 are arranged in the volume set cavity along the first direction Y

Specifically, the printed circuit board 201 is adjacent to the upper cover 101, and the battery module 40 is adjacent to the lower cover 102. The plastic bracket 30 is located between the printed circuit board 201 and the battery module 40. The housing 10 is, for example, of plastic material, but is not limited thereto.

Further, the upper cover 101 and the lower cover 102 may, for example, be mechanically connected. In an embodiment, the upper cover 101 and the lower cover 102 are bolted, but are not limited thereto, depending on actual application.

Further, the first connection bar 1011 and the second connection bar 1012 are provided on the side of the upper cover 101 away from the battery module 40. The first connection bar 1011 and the second connection bar 1012 are affixed to the upper cover 101, for example, and a part of the first connection bar 1011 and a part of the second connection bar 1012 further pass through the upper cover 101 and are connected to the printed circuit board (201).

Specifically, the first connection bar 1011 is located on the positive busbar 202 along the first direction Y The first connection bar 1011 and the positive busbar 202 forms a current loop with the positive busbar 202 through the printed circuit board 201, and for example outputs current to an external device. The second connection bar 1012 is located on the negative busbar 203 along the first direction Y The second connection bar 1012 forms a current loop with the negative busbar 203 through the printed circuit board 201.

Specifically, the first connection bar 1011 and the second connection bar 1012 are metallic materials, for example, copper materials in this embodiment, but are not limited thereto, specifically subject to actual application. The first connection bar 1011 and the second connection bar 1012 may, for example, transmit current, voltage, or temperature of the battery module 40. In an embodiment, the first connection bar 1011 and the second connection bar 1012 are located on the upper cover 101, and partially penetrated through the upper cover 101 and are soldered to the printed circuit board 201 to form a current transmission path, which is transmitted from the positive busbar 202 and the negative busbar 203 to the first connection bar 1011 and the second connection bar 1012, and the current is transmitted or communicated to an external device.

In an alternative embodiment of the present disclosure, the upper cover 101 is recessed with a plurality of mounting grooves 1016 along the direction toward one side close to the battery module 40. Apart of the first connection bar 1011 and a part of the second connection bar 1012 are disposed in corresponding ones of the mounting grooves 1016 along the first direction, respectively. Another part of the first connection bar 1011 and another part of the second connection bar 1012 pass through the mounting grooves 1016 and are connected to the printed circuit board 201.

Specifically, in the embodiment, the number of mounting slots 1016 is, for example, two, but is not limited thereto, depending on actual application. The mounting groove 1016 is recessed along the first direction Y toward one side close to the battery module 40, which facilitates the mounting of the first connection bar 1011 and the second connection bar 1012, reducing the risk of damage to the first connection bar 1011 and the second connection bar 1012 during installation or handling.

In an alternative embodiment of the present disclosure, the upper cover 101 further includes a first output stud 1013 and a second output stud 1014.

The first output stud 1013 and the second output stud 1014 are located in the corresponding mounting grooves 1016, respectively. The first output stud 1013 is connected to a side of the first connection bar 1011 away from the battery module 40. The second output stud 1014 is connected to a side of the second connection bar 1012 away from the battery module 40.

In the related technology, the connection bar is also connected to the adapter copper bar, the adapter copper bar is connected to the output stud, and the adapter copper bar is connected to the connection row bolt. In the embodiments of the present disclosure, the first connection bar 1011 and the second connection bar 1012 are directly connected to the first output stud 1013 and the second output stud 1014, respectively, eliminating the need for the adapter copper bar. The first connection bar 1011 and the second connection bar 1012 are directly welded to the first output stud 1013 and the second output stud 1014, respectively, eliminating materials such as bolts and nuts, and achieving the effect of reducing costs and simplifying the assembly process.

Specifically, the first output stud 1013 and the second output stud 1014 serve as a locking connection and are locked in connection with an external vehicle or other device.

In an optional embodiment of the present disclosure, each of the mounting grooves 1016 is provided with a mounting height along the first direction. A cross section of part of the first connection bar 1011 located in one of the mounting grooves 1016 along the first direction has a first arrangement height after being connected to the first output stud 1013, a cross section of part of the second connection bar 1012 located in one of the the mounting grooves 1016 along the first direction has a second arrangement height after being connected to the second output stud 1014, and both the first arrangement height and the second arrangement height are less than or equal to the mounting height.

Specifically, each of the mounting grooves 1016 is provided with a mounting height facing the battery module 40 along the first direction Y The two mounting grooves 1016 are configured to accommodate the first connection bar 1011 and the first output stud 1013, and the second connection bar 1012 and the second output stud 1014, respectively. An end of the first output stud 1013 and/or an end of the second output stud 1014 away from the battery module 40 are flush with a side of the upper cover 101 away from the battery module 40, or the end of the first output stud 1013 and/or the end of the second output stud 1014 away from the battery module 40 are lower than the side of the upper cover 101 away from the battery module 40, reducing the risk of damage and knock to the first output stud 1013 and the second output stud 1014 during installation or handling.

In an alternative embodiment of the present disclosure, the upper cover 101 further includes a communication connector 1015.

The communication connector 1015 includes a connection port 10151 and a plurality of connection pins 10152. The connection port 10151 is located on the side of the upper cover 101 away from the battery module 40. The connection pin 10152 is partially located in the connection port 10151, for example, to establish an electrical connection to the external communication connector, and the other part of the connection pin 10152 passes through the upper cover 101 and is connected to the printed circuit board 201.

Specifically, the number of connection pins 10152 is, for example, four. Part of the connection pin 10152 is connected to the external communication connector, and the other part of the connection pin 10152 passes through the upper cover 101 and is soldered to the printed circuit board 201. In the related technology, there are usually two connectors, the two connectors are connected through an adapter wiring harness, and both ends of the adapter wiring harness have an adaptor, which are connected to the connectors, respectively. In the embodiments of the present disclosure, the connection port 10151 is welded to the upper cover 101, and the connection pin 10152 is arranged in the connection port 10151 and is connected to the printed circuit board 201, so that the materials such as the adapter wiring harness, the adapter, the adapter connector, and the bolts and nuts for fixing the adapter connector in the relevant technology are saved, and the cost is reduced and the assembly process is simplified.

In an optional embodiment of the present disclosure, the upper cover 101 is integrally injection molded with the first connection bar 1011, the second connection bar 1012, the first output stud 1013, the second output stud 1014, and the communication connector 1015, which has the effect of reducing cost and facilitating the mounting of the battery pack.

In an alternative embodiment of the present disclosure, the printed circuit board 201 is arranged in relative parallel with the upper cover 101 and the lower cover 102. The positive busbar 202, the negative busbar 203 and the flexible circuit board 204 extend from the edge of the printed circuit board 201 along the first direction Y into the volume set cavity and are connected to the battery module 40. The positive electrode and the negative electrode of the plurality of cells 401 are located at one end or opposite ends of the cells 401 in the third direction Z, saving space along the first direction Y in the volume set cavity.

Specifically, the third direction Z is arranged vertically with the first direction Y and the second direction X, respectively. The plurality of the cells 401 are arranged along the second direction X, and the positive electrode and the negative electrode of the plurality of the cells 401 are located at one end or opposite ends of the cell 401 along the third direction Z, which can be understood as the plurality of the cells 401 are placed horizontally, so that the height of the entire battery pack can be reduced. Based on the positive electrode and the negative electrode of the plurality of cells 401 arranged horizontally, the post of the cell 401 is on the side surface, and the flexible circuit board 204 extends from the side surface and is connected to the battery module 40, thereby reducing the mounting difficulty of the flexible circuit board 204.

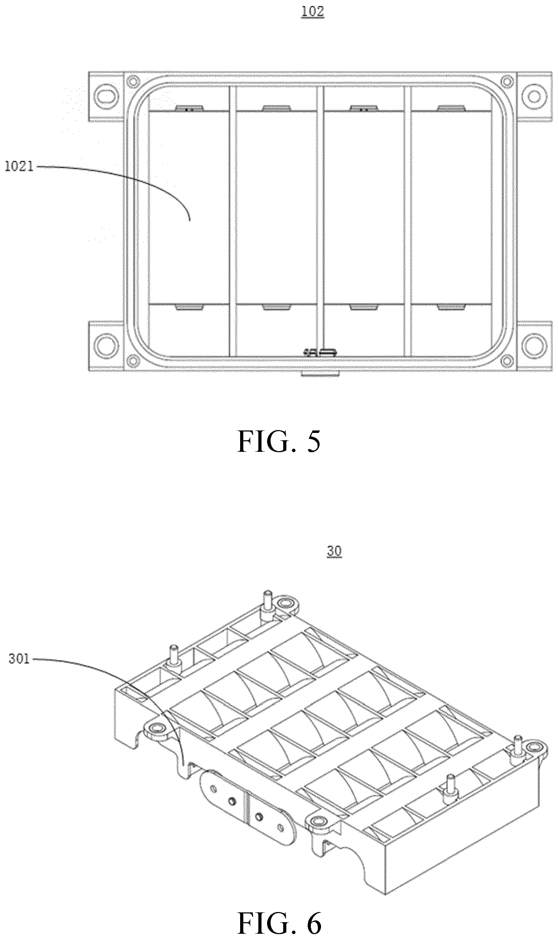

Referring to FIG. 5, in an alternative embodiment of the present disclosure, a side of the lower cover 102 close to the battery module 40 is recessed with a plurality of placement grooves 1021. The plurality of the placement grooves 1021 are arranged along the second direction X. The plurality of the cells 401 are disposed in the placement grooves 1021 along the second direction X.

Specifically, the lower cover 102 is provided with a plurality of shell plates, and the plurality of shell plates are enclosed to form a cavity. A side of the lower cover 102 close to the battery module 40 is recessed with a plurality of placement grooves 1021. The plurality of the placement grooves 1021 are located in the cavity. The cells 401 are located in the placement grooves 1021 in the cavity.

Further, the lower cover 102 may be provided with, for example, a connector socket for connection to an external device.

Referring to FIG. 6, in an alternative embodiment of the present disclosure, the plastic bracket 30 further includes a plurality of fixing portions 301.

A plurality of the fixing portions 301 are arranged along the second direction X. The fixing portions 301 are located on a side of the plastic bracket 30 facing the battery module 40, the plurality of the fixing portions 301 correspond one-to-one with the plurality of cells 401, and the fixing portions 301 are configured to surround and fix part of the cells 401.

Specifically, the plurality of fixing portions 301 are integrally formed with the plastic bracket 30. The number of the placing grooves 1021 and the fixing portions 301 correspond one to one with the number of the cells 401. In an embodiment, the cell 401 is a cylindrical battery, and the placement groove 1021 is recessed to a side away from the battery module 40 for placing the cell 401, so as to prevent the cell 401 from shaking in the battery pack 100 and affecting the cell performance and safety of the battery pack 100. A side of the fixed portion 301 facing the battery module is provided with an accommodating cavity. A part of one of the cells is located in a corresponding accommodating cavity. A side of the fixed portion 301 facing the battery module 40 has, for example, an arc shape, the space formed by the arc shape is, for example, an accommodation cavity. The center of the arc shape is, for example, on the side of the lower cover 102, so as to fit the cell 401. The accommodating chamber is adapted to the size of the cell 401, and cooperates with the lower cover 102 to immobilize the cell 401. In an embodiment, a baffle is, for example, provided between adjacent two cells 401. The baffle is integrally formed with the plastic bracket 30 to prevent a short circuit between the cells.

In an embodiment, the plastic bracket 30 is mechanically connected to the printed circuit board 201. Specifically, a plurality of studs are provided on the plastic bracket 30. A plurality of nuts matching the studs are provided on the printed circuit board 201. The studs and nuts are mechanically connected to realize the fixation of the plastic bracket 30 and the printed circuit board 201. The present disclosure does not limit the number of studs and nuts, depending on the actual application.

In an embodiment, the plastic bracket 30 is, for example, mechanically connected to the upper cover 101. In particularly, the plastic bracket 30 is bolted to the upper cover 101, but is not limited thereto, specifically depending on the actual application.

In an alternative embodiment of the present disclosure, the printed circuit board 201 is soldered to the housing 10.

Specifically, the printed circuit board 201 is soldered to a part of the first connection bar 1011 and a part of the second connection bar 1012 of the housing 10.

The battery pack provided in the present disclosure includes at least the following working process or principle: The battery pack 100 includes the battery module 40 and the battery management assembly 20 connected to the battery module 40. The battery management assembly 20 includes the printed circuit board 201, the positive busbar 202, the negative busbar 203, and the flexible circuit board 204. One end of the positive busbar 202 and one end of the negative busbar 203 are connected to the battery module 40, respectively. Another end of the positive busbar 202 and another end of the negative busbar 203 are connected to the printed circuit board 201. The flexible circuit board 204 is connected to the positive busbar 202, the negative busbar 203, the battery module 40, and the printed circuit board 201, respectively. It saves materials such as adapter connectors, greatly reduces the production cost and assembly cost of the battery pack, and realizes the effect of reducing costs and simplifying assembly processes.

## Claims

1. A battery pack (100), **characterized in that** the battery pack (100) comprises:
a battery module (40); and
a battery management assembly (20) connected to the battery module (40), the battery management assembly (20) comprising a printed circuit board (201), a positive busbar (202), a negative busbar (203), and a flexible circuit board (204);
wherein one end of the positive busbar (202) and one end of the negative busbar (203) are connected to the battery module (40), respectively, another end of the positive busbar (202) and another end of the negative busbar (203) are connected to the printed circuit board (201), respectively, and the flexible circuit board (204) is connected to the positive busbar (202), the negative busbar (203), the battery module (40) and the printed circuit board (201), respectively.

2. The battery pack (100) of claim 1, **characterized in that** the battery pack (100) comprises:
a plastic bracket (30) located between the printed circuit board (201) and the battery module (40) along a first direction; and
wherein the battery module (40) comprises a plurality of cells (401) arranged along a second direction intersecting the first direction, each of the cells (401) comprises a positive electrode and a negative electrode, the positive busbar (202) is connected to a positive electrode of a first one or a last one of the cells (401) arranged along the second direction, and the negative busbar (203) is connected to a negative electrode of the last one or the first one of the cells (401) arranged along the second direction.

3. The battery pack (100) of claim 2, **characterized in that** the plastic bracket (30) is further provided with a plurality of connection busbars (50), and except for a positive electrode and a negative electrode which are connected to the positive electrode busbar (202) and the negative busbar (203), respectively, each of the connection busbars (50) is connected to a positive electrode of one of adjacent two of the cells (401) and a negative electrode of another one of the adjacent two of the cells (401), respectively.

4. The battery pack (100) of claim 2 or 3, **characterized in that** the flexible circuit board (204) comprises a first flexible circuit board (2041), positive electrodes and negative electrodes of the cells (401) and the first flexible circuit board (2041) are located on a same side, and the first flexible circuit board (2041) is connected to the positive busbar (202), the negative busbar (203), the battery module (40), and the printed circuit board (201), respectively.

5. The battery pack (100) of claim 2 or 3, **characterized in that** positive electrodes and negative electrodes of the cells (401) are located at opposite ends of the cells (401), respectively, the flexible circuit board (204) comprises a first flexible circuit board (2041) and a second flexible circuit board (2042), the first flexible circuit board (2041) is connected to the positive busbar (202), the negative busbar (203), the battery module (40) and the printed circuit board (201), respectively, and the second flexible circuit board (2042) is connected to the connection busbars (50), the battery module (40) and the printed circuit board (201), respectively; and
wherein the first flexible circuit board (2041), the positive busbar (202) and the negative busbar (203) are located on a same side of the printed circuit board (201), and the second flexible circuit board (2042) is located on a side of the printed circuit board (201) away from the first flexible circuit board (2041).

6. The battery pack (100) of claim 3, **characterized in that** the battery pack comprises:
a housing (10) comprising an upper cover (101) and a lower cover (102) arranged along the first direction, wherein the upper cover (101) and the lower cover (102) define a volume set cavity, and the battery module (40), the battery management assembly (20) and the plastic bracket (30) are disposed in the volume set cavity along the first direction; and
wherein a side of the upper cover (101) away from the battery module (40) is provided with a first connection bar (1011) and a second connection bar (1012), and a part of the first connection bar (1011) and a part of the second connection bar (1012) pass through the upper cover (101) and are connected to the printed circuit board (201).

7. The battery pack (100) of claim 6, **characterized in that** the upper cover (101) is recessed with a plurality of mounting grooves (1016) along the first direction toward one side close to the battery module (40), a part of the first connection bar (1011) and a part of the second connection bar (1012) are disposed in corresponding ones of the mounting grooves (1016) along the first direction, respectively, and another part of the first connection bar (1011) and another part of the second connection bar (1012) pass through the mounting grooves (1016) and are connected to the printed circuit board (201).

8. The battery pack (100) of claim 7, **characterized in that** the upper cover (101) further comprises:
a first output stud (1013) and a second output stud (1014) located in corresponding ones of the mounting grooves (1016) respectively, wherein the first output stud (1013) is connected to a side of the first connection bar (1011) away from the battery module (40), and the second output stud (1014) is connected to a side of the second connection bar (1012) away from the battery module (40).

9. The battery pack (100) of claim 8, **characterized in that** each of the mounting grooves (1016) is provided with a mounting height along the first direction, a cross section of part of the the first connection bar (1011) located in one of the mounting grooves (1016) along the first direction has a first arrangement height after being connected to the first output stud (1013), a cross section of part of the second connection bar (1012) located in one of the the mounting grooves (1016) along the first direction has a second arrangement height after being connected to the second output stud (1014), and both the first arrangement height and the second arrangement height are less than or equal to the mounting height.

10. The battery pack (100) of claim 8, **characterized in that** the upper cover (101) further comprises:
a communication connector (1015) comprising a connection port (10151) and a connection pin (10152), wherein the connection port (10151) is located on the side of the upper cover (101) away from the battery module (40), a part of the connection pin (10152) is located in the connection port (10151), and another part of the connection pin (10152) passes through the upper cover (101) and is connected to the printed circuit board (201).

11. The battery pack (100) of claim 10, **characterized in that** the upper cover (101) is integrally injection molded with the first connection bar (1011), the second connection bar (1012), the first output stud (1013), the second output stud (1014), and the communication connector (1015).

12. The battery pack (100) of claim 6, **characterized in that** the printed circuit board (201) is arranged relatively parallel to the upper cover (101) and the lower cover (102), the positive busbar (202), the negative busbar (203) and the flexible circuit board (204) extend from an edge of the printed circuit board (201) into the volume set cavity along the first direction and are connected to the battery module (40), and positive electrodes and negative electrodes of the plurality of the cells (401) are located at one end or opposite ends of the cells (401) along a third direction intersecting the first direction and the second direction, respectively.

13. The battery pack (100) of claim 6, **characterized in that** a side of the lower cover (102) close to the battery module (40) is provided with a plurality of placement grooves (1021), the plurality of the placement grooves (1021) are arranged along the second direction, and the plurality of the cells (401) are disposed in the placement grooves (1021) along the second direction.

14. The battery pack (100) of claim 13, **characterized in that** the plastic bracket (30) further comprises:
a plurality of fixing portions (301) arranged along the second direction, wherein the fixing portions (301) are located on a side of the plastic bracket (30) facing the battery module (40), the plurality of the fixing portions (301) correspond one-to-one with the plurality of the cells (401), and each of the fixing portions (301) is configured to surround and fix a part of corresponding one of the cells (401).

15. The battery pack (100) of claim 10, **characterized in that** the printed circuit board (201) is soldered to the housing (10).
